# EUROPEAN PATENT APPLICATION

(11) **EP 4 723 404 A1**
(43) Date of publication of application: **08.04.2026**
(21) Application number: 24204775.1
(22) Date of filing: 04.10.2024
(51) Int. Cl.: H02G 3/08, H02G 3/06, H02G 15/007

(54) **CABLE GLAND**

(71) Applicant: Hager Industrial De Envolventes SAU, 08430 La Roca del Valles (ES)
(72) Inventor: Alferez, Marc, 08172 Sant Cugat del Valles (ES)
(74) Representative: Hagergroup

(57) **Abstract**

A cable gland (10) for feeding a cable through an opening provided in a wall of an electrical enclosure or in a wall of a housing of an electrical device and for securing the cable to the wall is disclosed. The cable gland (10) comprises a retaining part (20) and a holding part (30) both being aligned along a common longitudinal axis (A). The retaining part (20) and the holding part (30) are configured to be secured to one another by at least a rack (40) of teeth (42) arranged one after another in a direction parallel to the longitudinal axis (A), the rack (40) of teeth (42) cooperating with at least one retainment tab (44) engaging in one of the teeth (42).

## Description

The present invention relates to a cable gland, more particularly to cable gland of an electrical enclosure or a housing of an electrical device.

As is known, electrical enclosure or electrical devices like sockets are used in the most disparate environments, often characterized by being exposed to different atmospheric and environmental conditions. Said electrical enclosure or electrical devices can be subjected to external environmental agents, such as dust and water. It is therefore very important to provide these products with a high resistance to such agents, so that the correct operation of the sockets and of the plugs is not compromised. For example, the penetration of humidity in the enclosures or housings may entail a progressive deterioration of the metallic parts arranged within, with consequence of potential future malfunctions. Also, conditions of extreme danger may arise for the users of the electrical enclosure or the electrical device, linked for example to short-circuits or overheating that may increase the risk of fire.

For this reason, international standards have adopted a system for classifying electrical devices with respect to external agents, such as water and dust, which is known universally as IP rating.

This system substantially consists of two digits: the first one indicates the ability of the enclosure or housing to withstand the penetration of solid objects and dust, while the second digit indicates the ability thereof to oppose the penetration of water. For example, an IP65 rating indicates the ability of an enclosure to withstand penetration of dust and water when water is projected by a nozzle against the enclosure or housing.

Generally, cable glands known from prior art comprise two parts through each of which a cable is fed. One of the two parts is arranged on the outside of the enclosure or housing and the other one of the two parts is arranged on the inside of the enclosure or housing. Subsequently, both parts are coupled together through a screwing operation and using threaded portions provided in both parts. Such a cable gland is for instance known from prior art document DE 10 2016 120 039 A1.

However, the cable glands of the aforementioned type are cumbersome and time consuming to install.

The objective of the present invention is to provide a cable gland which can be installed in a simple and fast manner.

In accordance with the present invention, there is provided a cable gland for feeding a cable through an opening provided in a wall of an electrical enclosure or in a wall of a housing of an electrical device and for securing the cable to the wall. The cable gland comprises a retaining part and a holding part both being aligned along a common longitudinal axis. The retaining part comprises a first base portion and a first retaining portion connected to the first base portion and having a first surface. The holding part comprises a second base portion, a second retaining portion connected to the second base portion and fastened to the first retaining portion, and a clamping portion for clamping the cable. The clamping portion comprises an end section having a second surface resting against the first surface and further comprises a plurality of legs. Each leg is on the one hand connected to the second retaining portion and on the other hand to the end section.

The cable gland according to the present invention is characterized in that either one of the first retaining portion or the second retaining portion comprises at least a rack of teeth arranged one after another in a direction parallel to the longitudinal axis and the other one of the first retaining portion or the second retaining portion comprises at least one retainment tab engaging in one of the teeth to fasten the first retaining portion to the second retaining portion.

The cable gland according to the present invention allows for an easy and fast securing of the cable to the wall provided with the opening. The retaining part and the holding part are easy to attach to one another through a simple and linear relative motion.

Advantageously, each of the teeth comprises a first abutment surface which is perpendicular to the longitudinal axis and/or the retainment tab comprises a second abutment surface which is perpendicular to the longitudinal axis.

These aforementioned features allow the first and second retainment portions to be firmly secured to one another.

According to a preferred embodiment, each of the teeth comprises a first inclined surface which is inclined with respect to a plane which is perpendicular to the longitudinal axis and/or the retainment tab comprises a second inclined surface which is inclined with respect to a plane which is perpendicular to the longitudinal axis.

These additional features permit a smooth transition of the retainment tab from an engagement with a tooth to an engagement with the next tooth or another tooth of the rack.

Preferably, the first inclined surface and the second inclined surface are substantially parallel to one another.

These further additional features permit an even smoother transition of the retainment tab from the engagement with the tooth to the engagement with the next tooth or another tooth of the rack.

According to a preferred embodiment, the rack of teeth is delimited to one side by a sidewall extending in a plane in which the longitudinal axis lies.

These additional features prevent the retaining part and the holding part to be separated from one another by a rotation in a first relative rotational direction.

Preferably, the rack of teeth on the side opposite of the sidewall is devoid of such a sidewall extending in a plane in which the longitudinal axis lies.

These additional features allow for the retaining part and the holding part to be separated from one another by a rotation in a second relative rotational direction which is preferably opposite from the first relative rotational direction.

According to a preferred embodiment, the first retaining portion or the second retaining portion comprises a plurality of racks of teeth equiangularly arranged around the longitudinal axis.

Preferably, the legs are each bent inwardly and/or are each provided with a clamping surface arranged on a kink of the leg, the clamping surface being configured to rest against an outer surface of the cable to hold the cable against a displacement parallel to the longitudinal axis.

These aforementioned features allow for the cable to be firmly held by the clamping portion.

According to a preferred embodiment, the first retaining portion and/or the second retaining portion comprises snap-fit means configured to secure the retaining part and/or the holding part and/or the cable gland within the opening of the wall.

These additional features facilitate the installation of the cable gland in the opening of the wall and contribute to seal the inside of the enclosure or housing from the outside through a firm seat of the corresponding part in the opening.

Preferably, the first retaining portion and/or the first retaining portion essentially has the shape of a circular hollow cylinder.

According to a preferred embodiment, the first retaining portion comprises a plurality of incisions which are preferably distributed equidistantly in a circumferential direction around the longitudinal axis.

Thes additional features allow for a higher flexibility of the first retaining portion, thereby facilitating the insertion of the first retaining portion into the opening of the wall.

Preferably, the first base portion and/or the second base portion is/are provided with a sealing lip configured to contact the wall of the enclosure or the wall of the housing of the electrical device.

These additional features allow for a more effective sealing of the inside of the enclosure or housing from the outside of the enclosure or housing.

According to a preferred embodiment, the first base portion and/or the second base portion is/are made of a thermoplastic elastomer.

These additional features allow for a more effective sealing of the inside of the enclosure or housing from the outside of the enclosure or housing.

Preferably, that the first retaining portion, the second retaining portion and/or the clamping portion is/are made of a thermoplastic material.

Further benefits and advantages of the present invention will become apparent after a careful reading of the detailed description with appropriate reference to the accompanying drawings.

In the drawings:

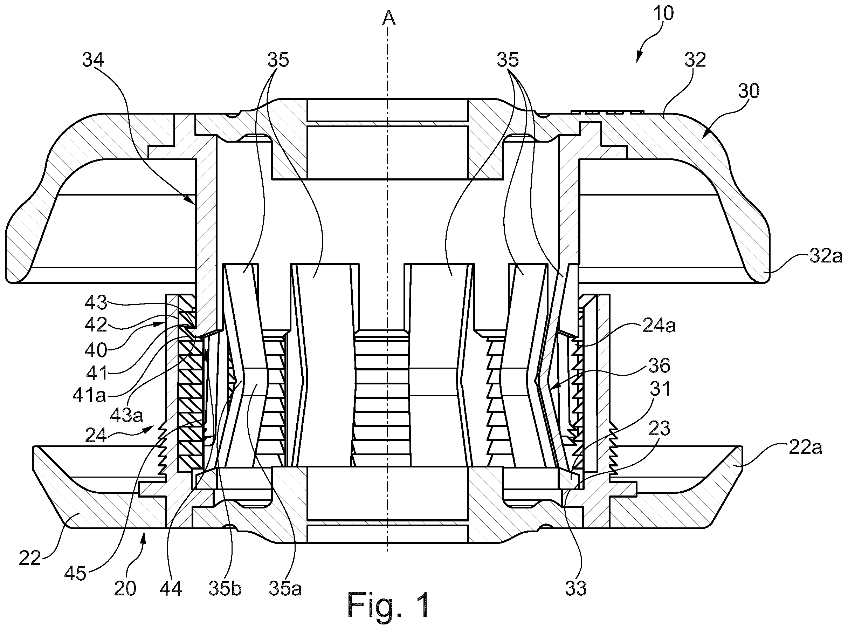

Fig. 1 is a cross-sectional view of a cable gland according to a preferred embodiment of the present invention;
Fig. 2 is a further cross-sectional view of the cable gland according to the preferred embodiment, where a retaining part of the cable gland and a holding part of the cable gland are in a relative position of maximum compression;
Fig. 3 is a perspective view of a retaining part of the cable gland according to the preferred embodiment; and
Fig. 4 is a perspective view of a holding part of the cable gland according to the preferred embodiment.

Referring to the drawings, a cable gland 10 according to the invention is configured to feed a cable through an opening provided in a wall of an electrical enclosure or in a wall of a housing of an electrical device and for securing the cable to the wall. The enclosure can for instance be a distribution box or a meter box. The electrical device can be a electric socket or an electric switch for example. According to the preferred embodiment, the electrical enclosure or the electrical device may be designed for outdoor installation.

As depicted in the figures, the cable gland 10 according to the present invention comprises a retaining part 20 and a holding part 30 both being aligned along a common longitudinal axis A. The retaining part 20 comprises a first base portion 22 and a first retaining portion 24 connected to the first base portion 22 and having a first surface 23. The holding part 30 comprises a second base portion 32, a second retaining portion 34 connected to the second base portion 32 and fastened to the first retaining portion 24, and a clamping portion 36 for clamping the cable.

According to the preferred embodiment, the first base portion 22 and/or the second base portion 32 is/are made of a thermoplastic elastomer. The first retaining portion 24, the second retaining portion 34 and/or the clamping portion 36 may be made of a thermoplastic material.

The first base portion 22 and/or the second base portion 32 is/are configured to be joined to the wall of the electrical enclosure or the housing of the electrical device to seal the inside of the electrical enclosure or the housing of the electrical device from the outside of the electrical enclosure or the housing of the electrical device. The first base portion 22 and/or the second base portion 32 may be essentially disk-shaped.

The retaining part 20 and the holding part 30 are configured to be assembled to one another to form the cable gland 10. To fix the cable gland 10 and the cable fed therethrough to the electrical enclosure, the cable is fist fed through the retaining part 20. The retaining part 20 is further aligned with the opening provided in the electrical enclosure and is positioned in the opening such that the first base portion 22 rests against the wall of the electrical enclosure from the outside of the enclosure. Then, on the inside of the electrical enclosure, the cable is fed through the holding part 30. The holding part 30 is further aligned with the opening provided in the electrical enclosure and is positioned in the opening such that the second base portion 32 rests against the wall of the electrical enclosure from the inside of the enclosure, thereby assembling the holding part 30 with the retaining part 20 to form the cable gland 10 which hence secures the cable inside the opening.

The first base portion 22 and/or the second base portion 32 may be provided with a sealing lip 22a, 32a configured to contact the wall of the enclosure or the wall of the housing of the electrical device. The sealing lip 22a, 32a is preferably circular in shape and is further preferably arranged at the circumference of first base portion 22 and/or the second base portion 32.

According to the preferred embodiment, the first retaining portion 24 and/or the second retaining portion 34 essentially have/has the shape of a circular hollow cylinder.

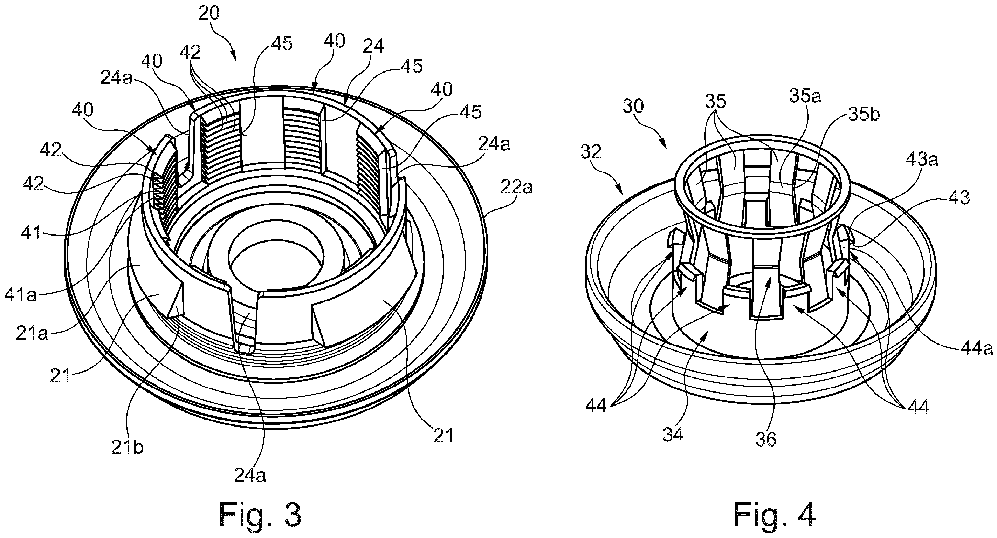

The first retaining portion 24 may comprise a plurality of incisions 24a which are preferably distributed equidistantly in a circumferential direction around the longitudinal axis A. The incisions 24a are preferably aligned in a direction which is parallel to the longitudinal axis A. The incisions 24a separate the first retaining portion 24 in segments 24b. As can be seen in particular in figure 3, the first retaining portion 24 according to the preferred embodiment is separated into three segments 24b via three incisions 24a. The incisions 24a provide flexibility to each of the segments 24b.

According to the preferred embodiment, the first retaining portion 24 and/or the second retaining portion 34 comprises snap-fit means 21 configured to secure the retaining part 20 and/or the holding part 30 and/or the cable gland 10 within the opening of the wall. In particular, at least one snap-fit means 21 may be present on each segment 24b. The snap-fit means 21 may comprise a leading chamfrain 21a and a resting surface 21b resting against the wall of the enclosure or the wall of the housing of the electrical device. When the first retaining portion 24 and/or the second retaining portion 34 are inserted into the opening of the wall, the leading chamfrain 21a is pushed against an edge of the opening, thereby deflecting the segment 24b of the retaining portion 24 inwardly until the snap-fit means 21 is entirely fed through the opening and the resting surface 21b rests against the wall in vicinity of the opening.

According to the invention, the clamping portion 36 comprises an end section 31 having a second surface 33 resting against the first surface 23 and further comprises a plurality of legs 35. Each leg 35 is connected to the second retaining portion 34 and to the end section 31. The legs 35 may be equiangularly disposed around the longitudinal axis A.

The legs 35 are configured to rest against an outer surface of the cable to hold the cable against a displacement parallel to the longitudinal axis A. Preferably, the legs 35 are configured to be pressed against the outer surface of the cable when the second surface 33 rests against the first surface 23 and/or is pushed against the first surface 23 and/or when the end section 31 and the second retaining portion 34 are pushed together.

According to the preferred embodiment, the legs 35 are each bent inwardly, i.e. the legs 35 are bent towards the longitudinal axis A. Preferably, the legs 35 are each provided with a clamping surface 35a arranged on a kink 35b of the leg 35, the clamping surface 35a being configured to rest against the outer surface of the cable to hold the cable against a displacement parallel to the longitudinal axis A thereby providing strain relief.

As can be seen in particular in figure 4, the clamping portion 36 according to the present embodiment comprises nine legs 35 which are preferably disposed equiangularly around the longitudinal axis A.

According to the present invention, either the first retaining portion 24 comprises at least a rack 40 of teeth 42 arranged one after another in a direction parallel to the longitudinal axis A and the second retaining portion 34 comprises at least one retainment tab 44 engaging in one of the teeth 42 to fasten the first retaining portion 24 to the second retaining portion 34, or the second retaining portion 34 comprises at least a rack 40 of teeth 42 arranged one after another in a direction parallel to the longitudinal axis A and the first retaining portion 24 comprises at least one retainment tab 44 engaging in one of the teeth 42 to fasten the first retaining portion 24 to the second retaining portion 34.

The teeth 42 are arranged behind one another in a direction which is parallel to the longitudinal axis A to form the rack 40 of teeth 42. The retainment tab 44 may also be referred to as the pawl of the rack 40.

The rack 40 of teeth 42 together with the retainment tab 44 form a ratchet mechanism which resembles the ratchet mechanism of a conventional cable tie. The rack 40 of teeth 42 is configured to allow the retaining part 20 and the holding part 30 to be pushed together in a direction parallel to the longitudinal axis A and is configured to lock the retaining part 20 and the holding part 30 together against a separation of the retaining part 20 and the holding part 30 in a direction which is parallel to the longitudinal axis A.

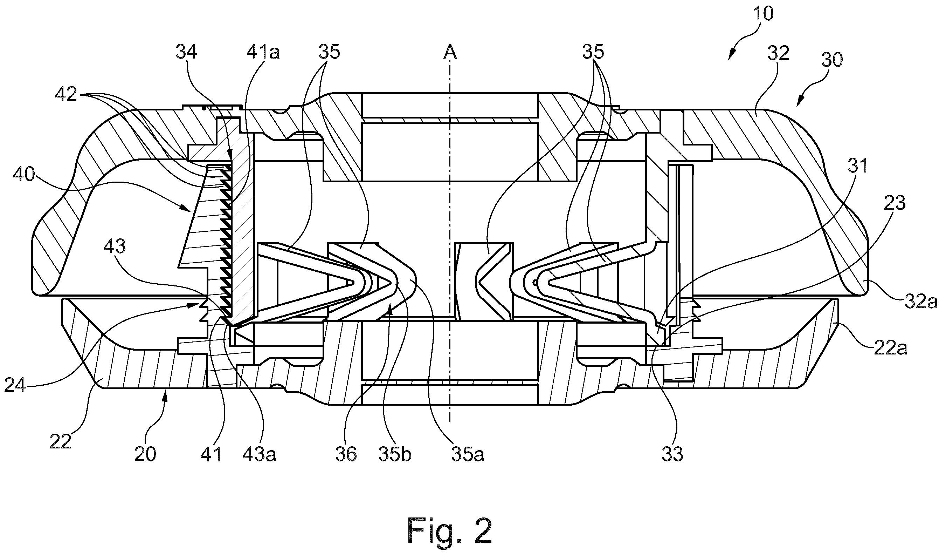

When the retainment tab 44 engages in one of the teeth 42 of the rack 40, the second surface 33 rests against the first surface 23 and/or is pushed against the first surface 23. The engagement of the retainment tab 44 to one of the teeth 42 can be obtained by pushing the retaining part 20 and the holding part 30 together in a direction parallel to the longitudinal axis A. As a consequence, the legs 35 and/or the clamping surface 35a are pushed against the outer surface of the cable to hold the cable against a displacement in a direction parallel to the longitudinal axis A thereby providing strain relief. By further pushing the retaining part 20 and the holding part 30 together, the retainment tab 44 can be displaced in a direction parallel to the longitudinal axis A and relatively to the rack 40 of teeth 42 to engage in another tooth 42 of the rack 40, the second surface 33 is further pushed against the first surface 23 and the legs 35 are further pushed inwardly to increase the clamping force exerted by the legs 35 and/or the clamping surface 35a on the outer surface of the cable, thereby enhancing the strain relief. The more the retaining part 20 and the holding part 30 together are pushed together, the more the clamping force exerted by the legs 35 is high and the more the strain relief provided to the cable gland 10 is high. Figure 2 shows the retaining part 20 and the holding part 30 being in a position of maximum compression between the retaining part 20 and the holding part 30.

The retainment tab comprises a resilient tongue 44a. The resilient tongue 44a may present a shape of a segment of a cylindrical surface.

Preferably, the second retaining portion 34 or the first retaining portion 24 comprises a plurality of racks 40 of teeth 42 equiangularly arranged around the longitudinal axis A.

As can be seen in particular in figures 3 and 4, the cable gland 10 according to the preferred embodiment comprises nine racks 40 of teeth 42 and nine retainment tabs 44, which are each preferably disposed equiangularly around the longitudinal axis A.

Each of the teeth 42 may comprise a first abutment surface 41 which is perpendicular to the longitudinal axis A and/or the retainment tab 44 comprises a second abutment surface 43 which is perpendicular to the longitudinal axis A. When the retainment tab 44 engages in the tooth 42, the first abutment surface 41 rests against the second abutment surface 43.

Furthermore, each of the teeth 42 may comprise a first inclined surface 41a which is inclined with respect to a plane which is perpendicular to the longitudinal axis A and/or in that the retainment tab 44 comprises a second inclined surface 43a which is inclined with respect to a plane which is perpendicular to the longitudinal axis A. When the retainment tab 44 is displaced in a direction which is parallel to the longitudinal axis A from an engagement in one tooth 42 of the rack 40 to an engagement of another tooth 42 of the rack 40, the first inclined surface 41a glides along the second inclined surface 43a. Preferably, the first inclined surface 41a and the second inclined surface 43a are substantially parallel to one another.

The rack 40 presents a plurality of teeth 42, each tooth corresponding to a relative position of the retaining part 20 and the holding part 30. According to the preferred embodiment, each rack 40 of teeth 42 comprises eleven teeth arranged one behind another in a direction which is parallel to the longitudinal axis A. Each tooth 42 of the same rack 40 corresponds to one relative position of the retaining part 20 and the holding part 30. Preferably the teeth 42 of a same rack 40 are evenly distributed on the rack 40, i.e. are equidistantly arranged one behind another.

According to the preferred embodiment, the first retaining portion 24 and the second retaining 34 portion can adopt a plurality of different relative positions equal in number to the number of teeth 42 of each rack 40.

The rack 40 of teeth 42 may be delimited to one side by a sidewall 45 extending in a plane in which the longitudinal axis A lies. The sidewall 45 may abut against the retainment tab 44 to prevent a relative rotational movement of the retaining part 20 and the holding part 30 in a first relative rotational direction.

The rack 40 of teeth 42 may further be devoid of such a side wall on the side opposite of the sidewall 45. The fact that the rack 40 is to one side devoid of such a sidewall may allow for a separation of the retainment tab 44 from the tooth by a rotation, for example by a rotation in a direction which is opposite to first relative rotational direction.

For the sake of intelligibility, not all legs 35, all racks 40 or all teeth 42 have been provided with a reference numeral in the drawings.

The cable gland 10 according to the preferred embodiment allows for a simple and easy installation in the opening of the wall an allows for a use in conformity with IP rating IP65. The cable gland 10 avoids strain on the cable when pulled from the outside and prevents damaging of the electrical connections on the inside of the enclosure or housing.

Compared to conventional cable glands which require a screwing operation to connect their two parts together, the retaining part 20 and the holding part 30 of the cable gland 10 according to the present application may be connected to one another by a simple linear motion in a direction parallel to the longitudinal axis A.

## Claims

1. Cable gland for feeding a cable through an opening provided in a wall of an electrical enclosure or in a wall of a housing of an electrical device and for securing the cable to the wall, comprising a retaining part (20) and a holding part (30) both being aligned along a common longitudinal axis (A), the retaining part (20) comprising a first base portion (22) and a first retaining portion (24) connected to the first base portion (22) and having a first surface (23), the holding part (30) comprising a second base portion (32), a second retaining portion (34) connected to the second base portion (32) and fastened to the first retaining portion (24), and a clamping portion (36) for clamping the cable, the clamping portion (36) comprising an end section (31) having a second surface (33) resting against the first surface (23) and further comprising a plurality of legs (35), each leg (35) being connected to the second retaining portion (34) and to the end section (31), **characterized in that** either one of the first retaining portion (24) or the second retaining portion (34) comprises at least a rack (40) of teeth (42) arranged one after another in a direction parallel to the longitudinal axis (A) and the other one of the first retaining portion (24) or the second retaining portion (34) comprises at least one retainment tab (44) engaging in one of the teeth (42) to fasten the first retaining portion (24) to the second retaining portion (34).

2. Cable gland according to claim 1, **characterized in that** each of the teeth (42) comprises a first abutment surface (41) which is perpendicular to the longitudinal axis (A) and/or **in that** the retainment tab (44) comprises a second abutment surface (43) which is perpendicular to the longitudinal axis (A).

3. Cable gland according to any one of the claims 1 or 2, **characterized in that** each of the teeth (42) comprises a first inclined surface (41a) which is inclined with respect to a plane which is perpendicular to the longitudinal axis (A) and/or **in that** the retainment tab (44) comprises a second inclined surface (43a) which is inclined with respect to a plane which is perpendicular to the longitudinal axis (A).

4. Cable gland according to claim 3, **characterized in that** the first inclined surface (41a) and the second inclined surface (43a) are substantially parallel to one another.

5. Cable gland according to any one of the claims 1 to 4, **characterized in that** the rack (40) of teeth (42) is delimited to one side by a sidewall (45) extending in a plane in which the longitudinal axis (A) lies.

6. Cable gland according to claim 5, **characterized in that** the rack (40) of teeth (42) on the side opposite of the sidewall (45) is devoid of a sidewall extending in a plane in which the longitudinal axis (A) lies.

7. Cable gland according to any one of the claims 1 to 6, **characterized in that** the second retaining portion (34) or the first retaining portion (24) comprises a plurality of racks (40) of teeth (42) equiangularly arranged around the longitudinal axis (A).

8. Cable gland according to any one of the claims 1 to 7, **characterized in that** the legs (35) are each bent inwardly and/or are each provided with a clamping surface (35a) arranged on a kink (35b) of the leg (35), the clamping surface (35a) being configured to rest against an outer surface of the cable to hold the cable against a displacement parallel to the longitudinal axis (A).

9. Cable gland according to any one of the claims 1 to 8, **characterized in that** the first retaining portion (24) and/or the second retaining portion (34) comprises snap-fit means (21) configured to secure the retaining part (20) and/or the holding part (30) and/or the cable gland (10) within the opening of the wall.

10. Cable gland according to any one of the claims 1 to 9, **characterized in that** the first retaining portion (24) and/or the second retaining portion (34) essentially has the shape of a circular hollow cylinder.

11. Cable gland according to any one of the claims 1 to 10, **characterized in that** the first retaining portion (24) comprises a plurality of incisions (24a) which are preferably distributed equidistantly in a circumferential direction around the longitudinal axis (A).

12. Cable gland according to any one of the claims 1 to 11, **characterized in that** the first base portion (22) and/or the second base portion (32) is/are provided with a sealing lip (22a, 32a) configured to contact the wall of the enclosure or the wall of the housing of the electrical device.

13. Cable gland according to any one of the claims 1 to 12, **characterized in that** the first base portion (22) and/or the second base portion (32) is/are made of a thermoplastic elastomer.

14. Cable gland according to any one of the claims 1 to 13, **characterized in that** the first retaining portion (24), the second retaining portion (34) and/or the clamping portion (36) is/are made of a thermoplastic material.

## Amended claims

### Amended claims in accordance with Rule 137(2) EPC.

1. Cable gland for feeding a cable through an opening provided in a wall of an electrical enclosure or in a wall of a housing of an electrical device and for securing the cable to the wall, comprising a retaining part (20) and a holding part (30) both being aligned along a common longitudinal axis (A), the retaining part (20) comprising a first base portion (22) and a first retaining portion (24) connected to the first base portion (22) and having a first surface (23), the holding part (30) comprising a second base portion (32), a second retaining portion (34) connected to the second base portion (32) and configured to be fastened to the first retaining portion (24), and a clamping portion (36) for clamping the cable, the clamping portion (36) comprising an end section (31) having a second surface (33) configured to rest against the first surface (23) and further comprising a plurality of legs (35), each leg (35) being connected to the second retaining portion (34) and to the end section (31), **characterized in that** either one of the first retaining portion (24) or the second retaining portion (34) comprises at least a rack (40) of teeth (42) arranged one after another in a direction parallel to the longitudinal axis (A) and the other one of the first retaining portion (24) or the second retaining portion (34) comprises at least one retainment tab (44) engaging in one of the teeth (42) to fasten the first retaining portion (24) to the second retaining portion (34), the legs (35) being each bent inwardly and being each provided with a clamping surface (35a) arranged on a kink (35b) of the leg (35), the clamping surface (35a) being configured to rest against an outer surface of the cable to hold the cable against a displacement parallel to the longitudinal axis (A).

2. Cable gland according to claim 1, **characterized in that** each of the teeth (42) comprises a first abutment surface (41) which is perpendicular to the longitudinal axis (A) and/or **in that** the retainment tab (44) comprises a second abutment surface (43) which is perpendicular to the longitudinal axis (A).

3. Cable gland according to any one of the claims 1 or 2, **characterized in that** each of the teeth (42) comprises a first inclined surface (41a) which is inclined with respect to a plane which is perpendicular to the longitudinal axis (A) and/or **in that** the retainment tab (44) comprises a second inclined surface (43a) which is inclined with respect to a plane which is perpendicular to the longitudinal axis (A).

4. Cable gland according to claim 3, **characterized in that** the first inclined surface (41a) and the second inclined surface (43a) are substantially parallel to one another.

5. Cable gland according to any one of the claims 1 to 4, **characterized in that** the rack (40) of teeth (42) is delimited to one side by a sidewall (45) extending in a plane in which the longitudinal axis (A) lies.

6. Cable gland according to claim 5, **characterized in that** the rack (40) of teeth (42) on the side opposite of the sidewall (45) is devoid of a sidewall extending in a plane in which the longitudinal axis (A) lies.

7. Cable gland according to any one of the claims 1 to 6, **characterized in that** the second retaining portion (34) or the first retaining portion (24) comprises a plurality of racks (40) of teeth (42) equiangularly arranged around the longitudinal axis (A).

8. Cable gland according to any one of the claims 1 to 7, **characterized in that** the first retaining portion (24) and/or the second retaining portion (34) comprises snap-fit means (21) configured to secure the retaining part (20) and/or the holding part (30) and/or the cable gland (10) within the opening of the wall.

9. Cable gland according to any one of the claims 1 to 8, **characterized in that** the first retaining portion (24) and/or the second retaining portion (34) essentially has the shape of a circular hollow cylinder.

10. Cable gland according to any one of the claims 1 to 9, **characterized in that** the first retaining portion (24) comprises a plurality of incisions (24a) which are preferably distributed equidistantly in a circumferential direction around the longitudinal axis (A).

11. Cable gland according to any one of the claims 1 to 10, **characterized in that** the first base portion (22) and/or the second base portion (32) is/are provided with a sealing lip (22a, 32a) configured to contact the wall of the enclosure or the wall of the housing of the electrical device.

12. Cable gland according to any one of the claims 1 to 11, **characterized in that** the first base portion (22) and/or the second base portion (32) is/are made of a thermoplastic elastomer.

13. Cable gland according to any one of the claims 1 t1213, **characterized in that** the first retaining portion (24), the second retaining portion (34) and/or the clamping portion (36) is/are made of a thermoplastic material.
